(19) Europäisches Patentamt
European Patent Office
Office européen des brevets

(11) **EP 2 182 599 B1**

(12) **EUROPÄISCHE PATENTSCHRIFT**

(45) Veröffentlichungstag und Bekanntmachung des Hinweises auf die Patenterteilung:
**19.10.2016 Patentblatt 2016/42**

(51) Int Cl.:
***H02G 3/04*** *(2006.01)*

(21) Anmeldenummer: **08018996.2**

(22) Anmeldetag: **30.10.2008**

(54) **Wellrohr aus Kunststoff, insbesondere zum Ummanteln elektrischer Leitungen**

Corrugated plastic pipe especially for covering electric lines

Tuyau ondulé en plastique, notamment destiné à recouvrir des câbles électriques

(84) Benannte Vertragsstaaten:
**CZ DE FR PL PT RO**

(43) Veröffentlichungstag der Anmeldung:
**05.05.2010 Patentblatt 2010/18**

(73) Patentinhaber: **SCHLEMMER GMBH**
**85586 Poing (DE)**

(72) Erfinder:
• **Chu, Van-Ngoc**
**85586 Poing (DE)**
• **Cenadi, Laurentiu**
**97437 Hassfurt (DE)**

(74) Vertreter: **Horn Kleimann Waitzhofer**
**Patentanwälte PartG mbB**
**Ganghoferstrasse 29a**
**80339 München (DE)**

(56) Entgegenhaltungen:
**EP-A- 0 860 921 DE-A1- 19 700 916**
**JP-A- 2003 079 021**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

EP 2 182 599 B1

**Beschreibung**

Die Erfindung bezieht sich auf ein Wellrohr aus Kunststoff, insbesondere zum Ummanteln elektrischer Leitungen, mit über seine Länge verteilten, abwechselnd aufeinander folgenden, umlaufenden Wellenbergen und Wellentälern, wobei die Wellenberge gegenüber den Wellentälern eine radiale Höhe (h) aufweisen, sowie mit einem entlang einer Mantellinie verlaufendem Schlitz, wobei die beidseits des Schlitzes liegenden Randbereiche des Wellrohres Formgebungen an den Wellenbergen aufweisen, mittels derer bei einander überlappenden Randbereichen ein lösbarer Verschluß ausbildbar ist, und wobei alle Formgebungen, in Umfangsrichtung jedes Wellenberges gesehen, jeweils drei unmittelbar aneinander anschließende Formausbildungen mit zueinander unterschiedlicher, in ihrer Abfolge am Wellenberg entweder abnehmender oder zunehmender Breite umfassen, wobei der Schlitz alle Formausbildungen mittlerer Breite in zwei Teilabschnitte zerschneidet, deren jeder jeweils einem Randabschnitt zugeordnet ist, ferner alle Formgebungen - im radialen Querschnitt der Wellenberge gesehen - jeweils lage- und formidentisch zueinander angeordnet sind und die Formausbildungen größter und mittlerer Breite auf ihren radialen Unterseiten jeweils mit einer radial nach innen hin offenen Ausnehmung versehen sind, welche bei der Formausbildung größter Breite eine Weite aufweist, in welche die Außenform der Formausbildung mittlerer Breite radial einsteckbar ist, und bei der Formausbildung mittlerer Breite eine Weite hat, in welche die Außenform der Formausbildung kleinster Breite radial einführbar ist.

Kunststoffwellrohre mit einem Längsschlitz zum Ummanteln von elektrischen Leitungen, wie Kabeln oder Kabelbäumen, sind in vielfacher Ausführung bekannt. Der Schlitz dient dabei dazu, die zu ummantelnden Leitungen o. ä. durch Erweitern des Schlitzes in das Wellrohr einlegen zu können und damit ein aufwendiges Einfädeln der Leitungen in ein geschlossenes Rohr zu vermeiden.

Um nach dem Einlegen der Leitungen das Rohr jedoch wieder in eine geschlossene Form bringen und dadurch eine vollständige Ummantelung der eingelegten Leitungen erreichen zu können, ist es ferner bekannt, an den beidseits des Schlitzes liegenden Randbereichen des Wellrohres geeignete Formgebungen anzubringen, mittels derer bei einer Überlappung der beiden Randbereiche ein lösbarer Verschluß erzielt werden kann, wodurch das unerwünschte Eindringen von Spritzwasser vermieden wird.

So ist aus der DE 3246594 A1 ein geschlitztes Wellrohr bekannt, an dem die beidseits des Schlitzes liegenden Randbereiche über die gesamte Schlitzlänge hindurch verlaufende und sich in geschlossenem Zustand überlappende Formgebungen aufweisen, die radial nach außen abstehen und in Form von Nut und Feder ausgebildet sind, die an einem Rand eine durchlaufende Nut und am anderen Rand durchlaufende, komplementär geformte Federn umfassen. Das geschlitzte Wellrohr läßt sich nach dem Einlegen der Leitungen durch Ineinandergreifen der komplementären Formgebungen an beiden Randbereichen verschließen, wobei der dabei ausgebildete und sich entlang dem gesamten Schlitz erstreckende, durch überlappende und ineinander eingesteckte Formgebungen gebildete Verschluß eine unerwünschte Versteifung des Hüllrohres in dessen Längsrichtung ergibt, das sich beim Einbau dann, wenn es gebogen werden muß, als sehr steif erweist. Störend sind ferner die radial noch über die Wellenberge überstehenden Formgebungen, welche den Verschluß ausbilden. Zudem hat sich auch gezeigt, daß das Verschließen des Schlitzes dieses Wellrohres infolge der speziellen Formgebungen, die komplementär ineinander gesteckt werden müssen, wobei auch noch das Einführen einer Rastnase in eine Hinterschneidung erfolgen muß, schwierig ist.

Bei dem Kunststoffwellrohr gemäß der DE 19641421 A1 sind in den Randbereichen beidseits des Schlitzes radial abstehende, sich in Längsrichtung des Wellrohres, jedoch nur im Bereich der Wellentäler, erstreckende Vorsprünge vorgesehen, die zum Verschließen durch Überlappen der Randbereiche ineinander rasten. Dabei sind die Vorsprünge so ausgebildet, daß sie radial die Wellenberge nicht überragen. Bei dieser Ausgestaltung ist im verschlossenen Zustand das Hüllrohr zwar in seiner axialen Längsrichtung etwas weniger versteift als im Fall, daß sich die überlappenden Versteifungen durchgehend über die ganze Länge des Wellrohres erstrecken. Dennoch ist weiterhin eine merkliche Versteifung des Hüllrohres in Längsrichtung gegeben und in Fällen, bei denen nach dem Verschließen ein erneutes Öffnen des Längsschlitzes vorgenommen werden soll, erweist sich dies als relativ schwierig. Beim Überlappen der Randbereiche zum Verschließen tritt zudem auch noch der Nachteil auf, daß an den Wellenbergen, an denen keine speziellen Formgebungen für den Verschluß angebracht sind, beim Überlappen der Randbereiche bei Erzeugung des Verschlusses die Wand des einen Wellenberges die des anderen Wellenberges überlappt, wodurch der freie Rand des oben liegenden Wellenberges im verschlossenen Zustand einen radial überstehenden Abstand ausbildet, der sich in gleicher Größe und Lage an allen Wellenbergen findet. Ein solcher die runde Außenform des Wellrohres störender radialer Absatz bildet eine unerwünschte Stoßstelle am Außenumfang des Wellrohres aus.

Die DE 19705761 A1 beschreibt ein Kunststoffwellrohr, bei dem auf einer Seite des in einer Mantellinie verlaufenden Schlitzes ein Überlappungsbereich ausgebildet wird, bei dem die Wellenberge und die Wellentäler der Wellungen kleiner sind als im übrigen Wellrohrbereich. Diese kleinen Wellungen können mit den größeren Wellungen am gegenüber liegenden Randbereich des Längsschlitzes zum Verschluß in einen überlappenden Eingriff gebracht werden.

Aus der DE 197 00 916 A1 ist ein aus Kunststoff bestehendes Wellrohr zum Ummanteln elektrischer Leitungen bekannt, das, über seine Länge verteilt, abwechselnd aufeinanderfolgende, umlaufende Wellenberge und Wellentäler aufweist. An jedem Wellenberg sind, in Umfangsrichtung desselben gesehen, zwei Formgebungen mit zueinander teilweise unterschiedlicher Breite ausgebildet, wobei ein entlang einer Mantellinie verlaufender Schlitz die eine der beiden Formgebungen in zwei Teilabschnitt zertrennt, welche beidseits des Schlitzes die Randbereiche bilden und im verschlossenen Zustand des Wellrohres einander überlappen.

Ein Wellrohr aus Kunststoff ist aus der DE 3405552 A1 bekannt. Die Formgebungen sind dort jeweils an den Wellenbergen angebracht, wobei die Randbereiche beidseits des Schlitzes zueinander komplementäre Formausbildungen zeigen. Zum Verschließen des Wellrohres werden die beiden Randbereiche überlappt, so daß die am unten liegenden Randbereich vorgesehenen Formausbildungen in Ausnehmungen auf der Unterseite der am anderen Randbereich vorliegenden Formausbildungen formschlüssig radial eingeführt werden können. Dabei tritt bei diesem bekannten Wellrohr aber wiederum der Nachteil auf, daß der durch den Schlitz erzeugte Rand des im Verschluß radial außen liegenden Randbereiches jeweils radial über den darunter liegenden Randbereich übersteht und sich damit wiederum eine am Umfang des Wellrohres über dessen gesamte Länge hinweg verlaufende Stoßstelle ausbildet, die über alle Wellenberge und Wellentäler läuft. Infolge dieser Stoßstelle wird der ursprünglich kreisrunde Querschnitt sowohl an den Wellentälern, wie an den Wellenbergen in eine ovale Form überführt, die beim Anbringen von Verteileranschlüssen mit ihrem ganz präzise kreisförmigen Anschlußteil zu höchst unerwünschten Problemen, insbesondere bei der Abdichtung, führen kann. Außerdem führt dieses bekannte Kunstoff-Wellrohr aufgrund der bei ihm eingesetzten relativ komplizierten Formgebungen an den Wellenbergen, die im Verschlußzustand jeweils einander radial wie axial hintergreifende Hinterschneidungen ausbilden müssen, zu erheblichen Schwierigkeiten bei einer Herstellung durch ein Extrusionsverfahren mit nachgeschaltetem Korrugator, dessen Einsatz aber wegen seiner Wirtschaftlichkeit angestrebt wird.

Das in der EP 0 860 921 (insbesondere den Fig. 8A bis 10) beschriebene und dargestellte Wellrohr aus Kunststoff zum Ummanteln elektrischer Leitungen weist über seine Länge verteilt ebenfalls abwechselnd aufeinander folgende umlaufende Wellenberge und Wellentäler auf. Das Wellrohr ist mit einem entlang einer Mantellinie verlaufenden Schlitz versehen, wobei die beidseits des Schlitzes liegenden Randbereiche des Wellrohres Formgebungen an den Wellenbergen aufweisen, die bei einander überlappenden Randbereichen einen lösbaren Verschluß ausbilden. Diese Formgebungen umfassen dabei in Umfangsrichtung jedes Wellenberges gesehen drei aufeinander folgende Formausbildungen mit zueinander unterschiedlicher Breite. Dabei sind alle Formausbildungen - im radialen Querschnitt der Wellenberge gesehen - jeweils lage- und formidentisch zueinander angeordnet. Zum Verschluß des Wellrohres wird die in Umfangsrichtung gesehene mittlere Formgebung, die sich an einem Rand des Schlitzes befindet, unter die am gegenüberliegenden Rand des Schlitzes vorgesehene andere Formgebung größerer Breite und Höhe von unten her radial eingesteckt, wodurch sich der gewünschte Verschluß des Wellrohres ergibt.

Ein Wellrohr der eingangs genannten Art ist aus der JP-A-2003 079 021 bekannt. Zum Verschließen des Wellrohres werden wieder die beiden Randbereiche beidseits des Schlitzes überlappt, so daß am unten liegenden Randbereich vorgesehene Formausbildungen in Ausnehmungen auf der Unterseite der am anderen Randbereich vorliegenden Formausbildungen formschlüssig radial eingeführt werden können. Bei verschlossenem Wellrohr steht jedoch der durch den Schlitz erzeugte Rand des im Verschluß radial außen liegenden Randbereiches jeweils radial über den darunter liegenden Randbereich über, wodurch sich eine über die gesamte Länge des Wellrohres hinweg verlaufende Stoßstelle ausbildet, die über alle Wellenberge und Wellentäler läuft.

Ausgehend hiervon liegt der Erfindung die Aufgabe zugrunde, ein Wellrohr der eingangs genannten Art so zu verbessern, daß es bei weiterhin einfacher Betätigung des Verschlusses im verschlossenen Zustand weder eine unerwünschte radiale Stoßstelle am Außenumfang des Wellrohres aufweist, noch einen merkliche Ovalität im radialen Querschnitt des Hüllrohres vorliegt.

Erfindungsgemäß wird dies bei einem Wellrohr aus Kunststoff der eingangs genannten Art dadurch erreicht, daß die Mantelfläche des Wellrohres, in dessen nicht-verschlossenem Zustand (etwa vor Anbringen des Längsschlitzes), in dessen Wellentälern und Wellenbergen jeweils von zwei Kreisbögen unterschiedlich großer Radien gebildet wird, wobei die Kreisbögen mit größeren Radien und die Kreisbögen mit kleineren Radien im Querschnitt des Wellrohres gesehen jeweils in gleichen Winkellagen zueinander liegen, und jeweils der größere Radius um die Wanddicke im Wellental größer als der jeweils kleinere Radius ist, jeder der von den kleineren Radien gebildeten Kreisbögen an seinem einen Ende jeweils tangential in den vom entsprechenden größeren Radius gebildeten Kreisbogen einmündet und an seinem anderen Ende über einen im wesentlichen radialen Steg mit dem anderen Ende des vom entsprechenden größeren Radius gebildeten Kreisbogens verbunden ist, wobei die beiden radialen Stege ebenso wie die tangentialen Einmündungen der Kreisbögen mit größeren Radien in den Kreisbögen mit kleineren Radien jeweils in gleichen Winkellagen zueinander liegen, und daß alle Formgebungen in einem Bereich des vom kleineren Radius gebildeten Kreisbogens liegen, der den radialen Stegen benachbart ist, wobei ferner gilt: $r1 = R1 - h$ und $r2 = R2 - h$, worin $r1$ den größeren Radius und $r2$ den kleineren Radius im Wellental, $R1$ den größeren und $R2$ den kleineren Radius im Wellenberg und h die radiale Höhe des Wellenberges bezeichnen;

Das erfindungsgemäße Wellrohr hat durch seine Ausgestaltung derart, daß es bereits im nicht-verschlossenem Zustand (der dem Herstellungszustand noch vor Anbringen des Schlitzes entspricht) einen aus zwei Kreisbögen mit unterschiedlichem Radius umschlossenen Querschnitt aufweist, der dort, wo diese Kreisbögen nicht-tangential ineinander laufen, sondern an ihren einander benachbarten Enden über einen radial verlaufenden Verbindungssteg miteinander verbunden sind, bereits im Ausgangszustand eine Form, bei welcher der Randabschnitt, der beim Verschluß radial über dem anderen Randabschnitt liegt, den Außenumfang dieses anderen Randabschnitts entlang der gesamten Länge des Wellrohres (und zwar sowohl in den Wellentälern, wie an den Wellenbergen) um die Länge des radialen Steges (die der Wanddicke des Wellrohres in einem Wellental entspricht) radial nach außen überragt. Daran ändert sich auch nach Einbringen des Schlitzes nichts, so daß beim Verschluß, wenn der um den Verbindungssteg radial nach innen versetzte Randabschnitt unter den anderen Randabschnitt geschoben und seine Formgebungen in die Aufnahme des anderen Randabschnittes radial eingesteckt werden, alle Flächen an seinem Außenumfang um eben diese eine Wanddicke relativ zu der Unterseite des anderen Randabschnitts abgesenkt sind.

Damit verschwindet der radiale Überstand des einen Randabschnitts über den anderen bei bewirktem Verschluß, so daß dann am gesamten Außenumfang aller Wellenberge und Wellentäler keine wirksame äußere Stoßstelle mehr vorliegt.

Durch die speziell gewählte Ovalität des Ausgangsquerschnitts des Hüllrohres im noch nicht verschlossenem Zustand des erfindungsgemäßen Wellrohres wird nach erfolgtem Verschluß nicht nur das Verschwinden einer Stoßstelle am Außenumfang des Wellrohres bewirkt, sondern gleichzeitig auch die ursprünglich gewählte leichte Ovalität noch weiter im Hinblick auf die Annäherung an einen Kreisquerschnitt verringert, so daß das erfindungsgemäße Wellrohr auch kaum mehr eine Ovalität aufweist. Es hat sich gezeigt, daß es ohne irgendwelche Schwierigkeiten mit einem vorhandenen Verteileranschluß versehen werden kann, ohne daß sich dabei Probleme bei der relativen Abdichtung ergeben.

Für den Verschluß der beiden Randbereiche aneinander wird durch die an jedem Wellenberg (in jeweils gleicher Formgebung und Winkelstellung) jeweils vorgesehenen Formgebungen derart, daß in Umfangsrichtung gesehen jeweils drei unmittelbar aneinander anschließende und ineinander mündende Formausbildungen mit in Längsrichtung des Wellenberges gesehen unterschiedlicher, in ihrer Abfolge jedoch entweder mit abnehmender oder mit zunehmender Breite vorgesehen sind, in Verbindung mit der Anordnung des Schlitzes derart, daß er durch alle Formausbildungen mittlerer Breite hindurchläuft und diese jeweils in zwei Abschnitte zerteilt, erreicht, daß jeder dieser Abschnitte an jeweils einem anderen der beiden Randabschnitte vorliegt Dies bedeutet, daß beidseits des Schlitzes an jedem Wellenberg zunächst ein Teilabschnitt der vormaligen Formgebung mittlerer Breite (in Umfangsrichtung am Schlitz mündend) vorliegt, wobei am jeweiligen Randbereich die vom Schlitz beabstandete, am Wellenberg weiter noch vorhandene Formgebung an dem einen Randbereich die mit der größten Breite und am anderen Randbereich die mit der kleinsten Breite ist. Soll der Verschluß geschlossen werden, wird der Randbereich, an dem sich ein Teil der Formgebung mit der mittleren und die Formgebung mit der kleinsten Breite befinden, unter den anderen Randbereich geschoben, bis der vorne liegende Abschnitt der Formgebung mittlerer Breite direkt unterhalb der offenen Ausnehmung am Formbereich größter Breite im darüber liegenden Randabschnitt liegt. Beide unten liegenden Formbereiche können sodann radial auswärts in die entsprechende Aufnahmeöffnung auf der Unterseite der darüber liegenden Formgebung größter bzw. mittlerer Breite am oberen Randbereich einlaufen bzw. eingeführt werden, wonach der radial untere Randbereich vom radial oberen Randbereich um genau eine Wanddicke des Wellentals radial nach innen versetzt ist.

Dadurch, daß an jedem Wellenberg (in jeweils gleicher Formgebung und Winkelstellung) jeweils drei Formgebungen, in Umfangsrichtung gesehen, unmittelbar aneinander anschließend ausgebildet sind, die im Vergleich zueinander, in Längsrichtung des Wellenberges gesehen, unterschiedliche Breiten aufweisen, wobei in der Abfolge der Formgebungen diese Breiten (und zwar bei allen Wellenbergen in gleicher Weise) entweder abnehmen oder zunehmen, mit der Folge, daß jeweils die in Umfangsrichtung gesehen mittlere Formausbildung auf allen Wellenbergen eine mittlere Breite aufweist, und weil der Schlitz so angeordnet ist, daß er durch alle Formausbildungen mittlerer Breite hindurchläuft und diese jeweils in zwei Teilabschnitte aufteilt, wird erreicht, daß nach Anbringen des Schlitzes an jedem der dann entstandenen beiden seitlich des Schlitzes liegenden Randbereichen für jeden Wellenberg jeweils einer der beiden Teilabschnitte der Formgebung mittlerer Breite angeordnet ist, der bis zum Schlitz verläuft und dort infolge des Schlitzes endet. An diesen Teilbereich mittlerer Breite schließt sich, in Umfangsrichtung vom Schlitz weg gesehen, an einem Randbereich dann eine Formausbildung kleinerer Breite und am anderen Randbereich eine Formausbildung größerer Breite an.

Zum Schließen des Verschlusses wird der Randbereich, der neben dem Teilabschnitt mittlerer Breite noch die Formgebung kleiner Breite umfaßt, unter den anderen Randbereich soweit verschoben, bis sein Teilabschnitt mittlerer Breite direkt unterhalb des Teilabschnittes größter Breite und damit auch direkt bei der an dessen Unterseite angeordneten, radial nach innen hin offenen Ausnehmung liegt. Gleichzeitig ist bei dem unten liegenden Randbereich die Formausbildung kleinster Breite unterhalb des Teilabschnitts der Formausbildung mittlerer Breite am darüberliegenden Randabschnitt und damit auch direkt unterhalb der ihr zugewandten, zu ihr hin offenen Ausnehmung dieses Teilbereiches plaziert. Da die Ausnehmung bei der Formausbildung größter Breite eine Breite aufweist, in welche die Außenform der Formausbildung mittlerer Breite radial einsteckbar ist, und auch die Ausnehmung auf der Unterseite des Teilabschnittes mittlerer Breite am oberen Randabschnitt eine Breite aufweist, die größer als die Außenbreite der Formausbildung kleinster Breite ist, bedeutet dies, daß bei einer solchermaßen übereinanderliegenden Relativposition, wie oben geschildert, die Formausbildungen am unten liegenden Randabschnitt in die ihnen jeweils zugewandten Aufnahmen der Formausbildungen des oben liegenden Randabschnitts radial eingeführt werden können. Damit ist dann der gewünschte Verschluß bewirkt und die beiden Randabschnitte liegen genau um die Dicke der Wand am Wellental zueinander radial versetzt.

Da am unten angeordneten Randabschnitt an der Stelle, an der sich an den Teilabschnitt mittlerer Breite die Formausnehmung kleinster Breite anschließt, eine Breitenverringerung zwischen beiden stattfindet, bedeutet dies, daß dort der Teilabschnitt mittlerer Breite beidseits jeweils so weit zurückspringt, bis die Breite der Formausbildung kleinster Breite erreicht ist. An dieser Übergangsstelle entstehen somit, beidseits der Formausbildung kleinster Breite, an der zugewandten Endseite des Teilabschnitts mittlerer Breite zwei bis zur Breite des Formabschnitts kleinster Breite zurückspringende Wandabschnitte, die im Verschlußzustand, d. h. wenn sie in die Ausnehmungen auf der ihnen zugewandten Seite der Formausbildungen des darüber liegenden Randbereichs eingesteckt sind, als Anschläge dienen, welche eine formschlüssige Sperre entgegen einer in Umfangsrichtung und in Öffnungsrichtung des Verschlusses wirksamen Zugkraft bilden.

Das erfindungsgemäße Wellrohr kann einfach mittels Extrusionsverfahren und einem nachgeschaltetem Korrugator hergestellt werden, da es keine einem Korrugatoreinsatz nicht zugänglichen Hinterschneidungen aufweist. Der Verschluß selbst ist, nach Anbringen des Längsschlitzes, leicht und einfach durchzuführen, indem der entsprechende eine Randbereich nur unter den anderen geschoben und bei Erreichen der gewünschten Relativlage die am unteren Randbereich vorhandenen Formausbildungen in die Ausnehmungen des oberen Formbereiches radial eingeführt werden. Dabei ist es ganz besonders vorteilhaft, wenn die äußeren Abmessungen der Formausbildungen am unteren Randbereich und die Abmessungen der Ausnehmungen in den Formausbildungen auf der Unterseite des oben liegenden Randbereiches so bemessen sind, daß die Formausbildungen am unten liegenden Randbereich in die Ausnehmungen der Formausbildungen am oben liegenden Randbereich reibschlüssig eingeführt oder gar eingeclipst werden können.

Eine bevorzugte Ausgestaltung des erfindungsgemäßen Wellrohres besteht auch darin, daß in der Abfolge der aneinander anschließenden Formausbildungen die Formausbildungen kleinster Breite, in Umfangsrichtung der Wellenberge gesehen, an dem radialen Steg enden. Dadurch wird die Möglichkeit gegeben, bei einer entsprechenden Lage des Längsschlitzes an den Wellenbergen eine nahezu ununterbrochene Umlaufkontor zu erreichen.

Vorteilhafterweise beträgt bei dem erfindungsgemäßen Wellrohr der Kreisabschnitt, über den hinweg sich der Kreisbogen mit dem kleineren Radius erstreckt, 120° bis 160°, und der radiale Steg im zweiten Quadranten des Querschnitts ist um einen Winkel von 20° bis 60° zur Mittel-Hochachse des Querschnitts versetzt angebracht, wodurch sich eine Querschnittsform des erfindungsgemäßen Wellrohres ergibt, die bereits im nichtverschlossenen Zustand desselben eine nur sehr geringe Ovalität ergibt.

Eine weitere bevorzugte Ausgestaltung der Erfindung besteht auch darin, daß jede der bei einem Wellenberg aneinander anschließenden Formausbildungen zur radialen Mittelebene des Wellenberges angenähert parallel verlaufende Seitenwände aufweist, die an der Stelle des Übergangs zweier aneinander anschließender Formausbildungen jeweils mit den Seitenwänden der anschließenden Formausbildung über angenähert senkrecht zur radialen Mittelebene verlaufende Wandabschnitte verbunden sind. Hierdurch ergibt sich eine insgesamt einfache geometrische Gestaltung der Formausbildungen bei gleichzeitig guter mechanischer Sicherung bei durchgeführtem Verschluß entgegen einer unerwünschten Lösung desselben. Ganz besonders bevorzugt sind dabei die Formausbildungen größter und mittlerer Breite, in Umfangsrichtung des Wellenberges gesehen, jeweils mit einer allgemein rechteckigen Außenform sowie an ihren inneren Ausnehmungen ebenfalls mit einer allgemein rechteckigen Form ausgebildet.

Besonders vorteilhaft ist es ferner, wenn bei dem erfindungsgemäßen Wellrohr überall eine konstante Wandstärke vorliegt.

Die Erfindung wird nachfolgend anhand der Zeichnung im Prinzip beispielshalber noch näher erläutert. Es zeigen:

Fig. 1   eine Vorderansicht eines erfindungsgemäßen Wellrohres, nach dessen Extrusion, bereit geschlitzt, jedoch noch ohne überlappende Randbereiche;

Fig. 2   eine Seitenansicht des Wellrohres aus Fig. 1 von links (Blickrichtung A in Fig. 1);

Fig. 3   eine Vorderansicht des Wellrohres aus Fig. 1, jedoch mit überlappenden Randbereichen, im verschlossenen Zustand;

Fig. 4   einen Schnitt längs Schnittebene IV/IV aus Fig. 3;

Fig. 5   eine schräge Perspektivansicht eines erfindungsgemäßen Wellschlauches, bei dem die Randbereiche sich bereits überlappen, der Verschluß jedoch noch nicht geschlossen ist;

Fig. 6   eine Perspektivansicht entsprechend Fig. 5, wobei hier jedoch der Verschluß geschlossen ist;

Fig. 7    einen Ausschnitt aus einer Schnittansicht entsprechend Schnittlage VII/VII aus Fig. 3, und

Fig. 8    eine radiale Detail-Ansicht der ineinander gesteckten Formausbildungen eines geschlossenen Verschlusses (in Blickrichtung X in Fig. 4).

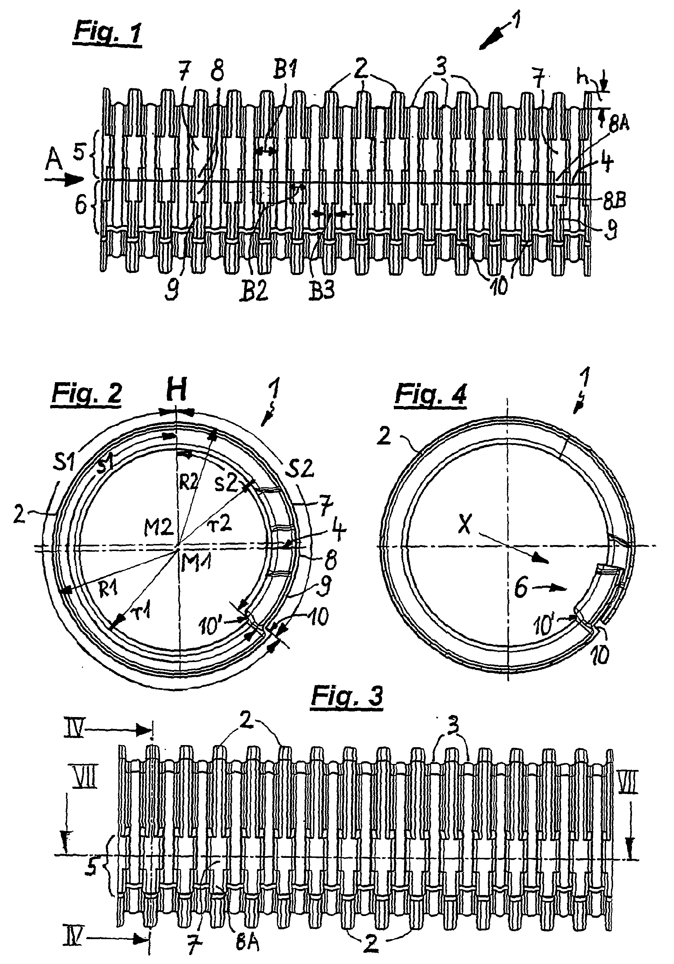

Fig. 1 zeigt die Längsansicht eines Wellrohres 1, das über seine Länge gleichmäßig verteilt und abwechselnd aufeinander folgend umlaufende Wellenberge 2 sowie Wellentäler 3 aufweist, wobei die Wellenberge 2 gegenüber den Wellentälern 3 eine radiale Höhe h aufweisen.

Das Wellrohr 1 ist mit einem entlang einer Mantellinie und parallel zur Rohr-Längsachse verlaufenden Schlitz 4 versehen, wobei an den beidseits dieses Schlitzes 4 liegenden Randbereichen 5 und 6 des geschlitzten Wellrohres 1 an den Wellenbergen Formgebungen 7, 8 und 9 angebracht sind, mittels derer - wie nachfolgend noch beschrieben - bei einander überlappenden Randbereichen 5, 6 ein lösbarer Verschluß ausgebildet werden kann.

Betrachtet man den Querschnitt des Wellrohres 1, wie er sich aus der in Fig. 2 dargestellten Seitenansicht (in Blickrichtung A in Fig. 1) ergibt und der das extrudierte, mit dem Längsschlitz 4 versehene Wellrohr 1 mit einander noch nicht überlappenden Randbereichen 5, 6 zeigt, so ist erkennbar, daß der Gesamtquerschnitt in diesem Zustand nicht kreisförmig ausgebildet ist. Vielmehr umfaßt er einen Abschnitt, bestehend aus einem (größeren) Kreissektor über einen Kreisbogen **S1** hinweg mit einem Krümmungsmittelpunkt **M1**, an den sich ein zweiter (kleinerer) Kreissektor über einen Kreisbogen **S2** hinweg mit einem eigenen Krümmungsmittelpunkt **M2** anschließt. Beide Krümmungsmittelpunkte **M2** und **M1** liegen auf einer Hochachse **H** des Querschnitts des Wellrohres 1, wobei **M2** jedoch zu **M1** (in Fig. 2: nach oben) etwas versetzt ist.

Diese Ausbildung führt dazu, daß der größere Kreisbogen **S1** im Querschnitt oben an der Hochachse **H** tangential in den kleineren Kreisbogen **S2** einläuft, während er an seinem anderen Ende das dort liegende Ende des kleineren Kreisbogen **S2** radial nach außen überragt. Dieses Ende des größeren Kreisbogen **S1** ist hier mit dem Ende des kleineren Kreisbogen **S2** über einen radialen Steg 10 verbunden, wie dies aus Fig. 2 gut ersichtlich ist.

Der dem größeren Kreisbogen **S1** zugeordnete Krümmungsradius **R1** (um den Krümmungsmittelpunkt **M1)** ist um soviel größer als der Krümmungsradius **R2** des zweiten Kreisbogens **S2** (um den Krümmungsmittelpunkt **M2),** daß der radiale Steg 10 eine Länge hat, die angenähert der Wanddicke **D** des Wellrohres 1 in der Mitte des Wellentals 3 entspricht oder geringfügig größer ist, so daß gilt:

$$R1 - R2 \approx D.$$

Völlig Gleiches gilt auch für die Geometrie im Wellental 3:

Über die Erstreckung des größeren Kreisbogens **S1** hinweg liegt auch am Boden des Wellentals 3 ein (größerer) Krümmungsradius **r1** und über den kleineren Kreisbogen **S2** hinweg ein (kleinerer) Krümmungsradius **r2** vor. Auch diese Krümmungsradien laufen oben im Querschnitt tangential ineinander ein, wo dasselbe für die Radien **R1** und **R2** gilt. Dort, wo **R1** und **R2** aber zueinander radial versetzt enden, liegt dasselbe auch bei den Radien **r1** und **r2** vor. Der sie verbindende radiale Steg 10' ist gleich groß wie der Steg 10. **M1** ist dabei der Krümmungsmittelpunkt von **R1** und **r1**, **M2** der von **R2** und **r2**.

An den Wellenbergen 2 sind, wie aus Fig. 1 gut erkennbar, in Umfangsrichtung jedes Wellenberges 2 gesehen, jeweils drei unmittelbar und direkt aneinander anschließende Formausbildungen 7, 8 und 9 vorgesehen, und zwar, relativ zum Längsschlitz 4 gesehen, an allen Wellenbergen 2 lage- und formidentisch zueinander angeordnet.

Wie aus der Darstellung der Fig. **1** ferner entnommen werden kann, weisen die drei Formgebungen 7, 8 und 9 im Vergleich zueinander unterschiedlich große Breiten **B1**, **B2** und **B3** auf und sind dabei so angeordnet, daß sie, in ihrer Abfolge in Umfangsrichtung des Wellschlauches 1 gesehen, entweder mit abnehmender oder mit zunehmender Breite vorliegen. Bei der in Fig. 1 dargestellten Ausführungsform eines Wellschlauches 1 ist die Ausrichtung der Breiten derart, daß sie in der Umfangsrichtung, die in Fig. 1 von oben nach unten verläuft, in ihrer Abfolge eine abnehmende Breite zeigen: Oben liegen die Formausnehmungen 7 mit größter Breite **B1**, an diese schließen sich die Formausnehmungen 8 mit mittlerer Breite **B2** und an diese dann noch die Formausnehmungen 9 kleinster Breite B3 an.

Dabei wird, wie Fig. 1 zeigt, jeweils die Formgebung 8 mit der mittleren Breite B2 vom Schlitz 4 in zwei Teilabschnitte 8A und 8B unterteilt, deren jeder an einem der beiden Randbereiche 5 bzw. 6 vorliegt und seinerseits jeweils direkt am Schlitz 4 mündet.

Die Formausnehmungen 7, 8 bzw. 8A und 8B sowie 9 liegen, wie der Querschnitt aus Fig. 2 erkennen läßt, alle im Bereich des Kreisbogens S2 mit dem kleineren Krümmungsradius R2.

Hieraus ergibt sich, daß am Randbereich 5 die Teilabschnitte 8A der Formbildung 8 mit mittlerer Breite **B2** und an deren vom Schlitz 4 abliegenden Seite die Formgebungen 7 größter Breite **B1** vorliegen, während am anderen Randbereich 6 der zweite Teilabschnitt 8B der Formgebungen 8, wieder mit der Breite **B2**, und, an dessen dem Schlitz 4 abgewandter Seite, die Formgebungen 9 mit kleinster Breite **B3** angebracht sind.

Die Lage des Längsschlitzes 4 ist dabei so gewählt, daß - in Umfangsrichtung des Wellrohres 1 gesehen - die Länge der Teilabschnitte 8B am Randbereich 6, an dem auch die Formausbildungen 9 mit kleinster Breite **B3** vorliegen, etwas größer ist als die Länge der Teilabschnitte 8A am anderen Randbereich 5, der auch noch die Formausbildungen 7 mit größter Breite **B1** umfaßt.

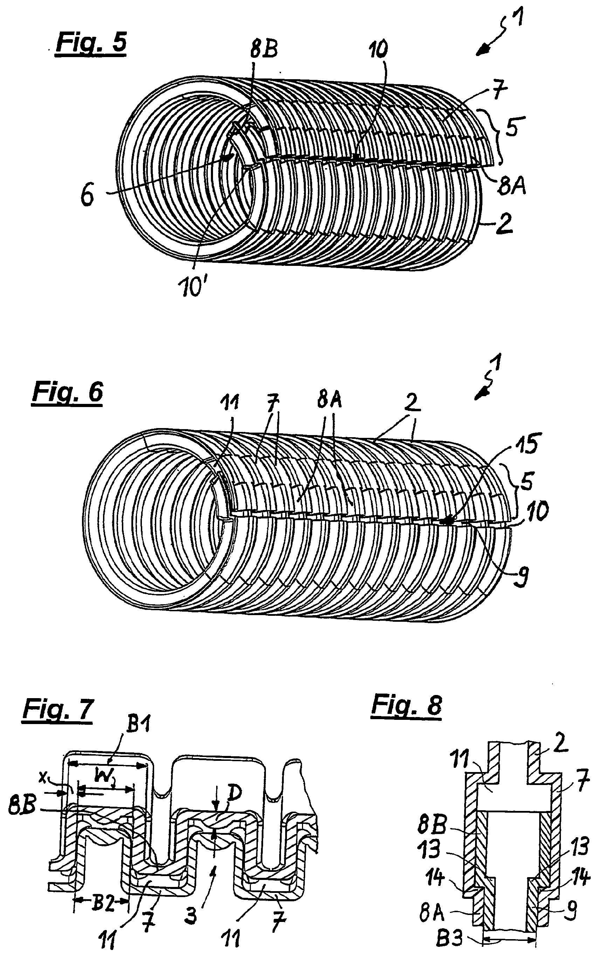

Besonders bevorzugt wird die Bemessung der Breiten **B1**, **B2** und **B3** entsprechend B1 = B2 + 2x sowie B2 = B3 + 2x vorgenommen, worin x die Wandstärke an der Flanke der Wellenberge 2 bezeichnet (vgl. Fig. 7).

Die Formausbildungen 7 und 8B größter und mittlerer Breite (B1; B2) sind auf ihren radialen Unterseiten so ausgebildet, daß sie jeweils eine radial nach unten hin offene Ausnehmung 11 (an der Unterseite der Formausbildung 7) bzw. 12 (an der Unterseite der Formausbildung 8A) ausformen (vgl. Fig. 2 und 4).

Dabei ist, wie Fig. 7 zeigt, die Aufnahmeweite **W** (in axialer Längsrichtung des Wellrohres 1 gesehen) jeder Ausnehmung 11 an der Unterseite der Formausbildung 7 mit der größten Breite **B1** so groß gewählt, daß (ebenfalls in Axialrichtung gesehen) die Außenbreite **B2** des Teilabschnitts 8B der Formausnehmung 8 mit mittlerer Breite **B2**, die am anderen Randbereich 6 vorliegt, in die Ausnehmung 11 radial von unten her eingeschoben werden kann, wie sich dies aus dem Schnitt der Fig. 7 erkennen läßt, der eine Schnittdarstellung entsprechend Schnittlage VII-VII in Fig. 3 zeigt, welche das Wellrohr 1 in einem Zustand wiedergibt, in dem die Randbereiche 5 und 6 einander überlappen und der Verschluß geschlossen ist.

Gleichermaßen gilt auch für die am Randbereich 5 vorliegenden Teilabschnitte 8A der Formgebungen 8 mittlerer Breite, daß die auf deren radialer Unterseite angebrachten Ausnehmungen 12 eine Aufnahmeweite, in Längsrichtung des Wellrohres 1 gesehen, haben, in deren jede jeweils eine Formausbildung 9 kleinster Breite **B1** radial von unten her einführbar ist.

Dabei sind die Aufnahmeweiten der Ausnehmungen 11 und 12 im Vergleich zu den einzuführenden Außenbreiten der Formausbildungen 8B sowie 9 so gewählt, daß sich beim radialen Einführen letzterer (bei Ausbildung des Verschlusses, wenn die Randbereiche 5 und 6 übereinander liegen, wobei Randbereich 5 radial außen angeordnet ist) ein reibschlüssiger Sitz der Formausbildungen 8B und 9 in den Ausnehmungen 11 und 12 ergibt. Es reicht aber auch völlig aus, wenn ein reibschlüssiger Sitz nur zwischen der Außenform der eingeführten Teilabschnitte 8B in den Ausnehmungen 11 an den Unterseiten der Formausbildungen 7 größter Breite oder gar ein einclipsbarer Sitz gewährleistet wird, wobei dann ohne weiteres auch die Aufnahmeweite der Ausnehmungen 12 an der Unterseite der Teilabschnitte 8A der Formausbildungen 8 mittlerer Breite größer als die Außenbreite der Formausbildungen 9 kleinster Breite sein kann, so daß im zusammengesteckten Zustand jede Formausbildungen 9 mit Spiel in der jeweiligen Ausnehmung 12 liegt.

Um in das in Fig. 1 gezeigte Wellrohr 1, das bereits mit dem Längsschlitz 4 versehen ist, z. B. zum Ummanteln elektrische Leitungen o.ä. einzuführen, werden die Randbereiche 5 und 6 beidseits des Schlitzes 4 jeweils in Richtung vom Schlitz weg auseinandergezogen, so daß eine Einführungsöffnung entsteht, über die die Leitungen o.ä. eingebracht werden können. Dieses Öffnen des Schlitzes kann sowohl manuell, wie auch maschinell vorgenommen werden.

Anschließend wird das Wellrohr 1 wieder geschlossen, wobei die Randbereiche 5 und 6 nicht mehr, wie beim Zustand in Fig. 1, am Schlitz 4 nebeneinander liegen, sondern (wie in Fig. 3 und in Fig. 4 als Schnitt längs Schnittebene IV-IV in Fig. 3 gezeigt) in Überlappung zueinander gebracht werden. Dabei wird der Randbereich 6, der neben den Teilabschnitten 8B mittlerer Breite auch noch die Formgebungen 9 mit kleinster Breite umfaßt, in radialer Richtung gesehen unter den Randbereich 5 mit den Teilabschnitten 8A mittlerer Breite **B2** und den anschließenden Formgebungen 7 größter Breite **B1** geschoben.

Diesen Zustand zeigt die schräg-perspektivische Ansicht von Fig. 5, wobei hier der Randbereich 6 zwar unter den Randbereich 5 geschoben ist, ohne daß jedoch der Verschluß der beiden Randbereiche 5, 6 aneinander ausgebildet ist.

Wie aus Fig. 5 erkennbar, wird dabei der Randbereich 6 soweit unter den Randbereich 5 verbracht, bis die Stege 10 am Kreisbogens **S1** dem zugewandten Ende des Wellenberges 2 am anderen Randabschnitt 5 unter Ausbildung nur eines sehr kleinen Spaltes 15 gegenüberliegen, wie dies aus den Fig. 4 und 5 erkennbar ist. In dieser Stellung liegen dann die Teilabschnitte 8B der Formgebungen 8 direkt unter den Ausnehmungen 11 auf der Unterseite der Formgebungen 7 und die Formgebungen 9 direkt unter den Ausnehmungen 12 auf der Unterseite der Teilabschnitte 8A.

Anschließend werden zum Verschließen des Verschlusses die Formgebungen 8B und 9 des Randabschnitts 6 aus der Stellung, in der sie in Fig. 5 gezeigt sind, radial nach außen in die Ausnehmungen 11 und 12 an der Unterseite der Formgebungen 7 und 8A am anderen Randabschnitt 5 hineingedrückt, wobei zumindest die in die Aufnahmen 11 eingesteckten Teilabschnitte 8B der Formgebungen 8 im eingesteckten Zustand reibschlüssig oder in Form einer Clips-Halterung in der jeweils aufnehmenden Ausbildung 11 sitzen.

Fig. 8 zeigt nun, in vergrößerter Detailansicht, die bei fertigem Verschluß ineinander greifenden Formgebungen der Randbereiche 5 und 6, und zwar von der radial unteren Seite her entsprechend Blickrichtung längs Pfeil X in Fig. 4 gesehen:

Die Blickrichtung verläuft radial von unten her in die Ausnehmung 11 an der Unterseite der Formgebung 7 größter Breite **B1**. Dabei bildet die Ausnehmung 11 einen im allgemeinen rechteckigen Aufnahmequerschnitt aus, in dem der radial von unten her eingedrückte Formabschnitt 8B des Randbereiches 6 sitzt und dort aufgenommen ist. An den Formabschnitt 8B schließt sich dann die Formgebung 9 geringster Breite **B3** an, die vom Teilabschnitt 8A der Formgebung 8 am Randabschnitt 5 aufgenommen und überdeckt wird.

Der Übergang von dem breiteren Teilabschnitt 8B zur schmaleren Formgebung 9 erfolgt durch von den Außenwänden des Teilabschnitts 8B angenähert senkrecht nach innen, aufeinander zu gerichtete Wandschenkel 13, die bis zu den Außenwänden der Formgebung 9 mit Breite **B3** verlaufen und in diese einmünden.

Diese Wandschenkel 13 stützen sich auf von den Außenwänden der Formgebung 7 ebenfalls angenähert senkrecht und aufeinander zu verlaufenden Wandschenkeln 14 ab, die ihrerseits in die Außenwände der Formgebung 8A übergehen, wie dies in Fig. 8 gezeigt ist, worauf insoweit ausdrücklich verwiesen wird.

Diese Abstützung der Schenkel 13 und 14 des Teilabschnitts 8B und der Formgebung 7, die gegeneinander anliegen, bildet einen Anschlag und verhindert, daß die in den Ausnehmungen 11 und 12 sitzenden Teile 8B und 9 bei Auftreten einer Kraft in Umfangsrichtung der Wellenberge 2 außer Eingriff kommen können, so daß der Verschluß auch bei Auftreten solcher Kräfte sicher hält.

Um den Verschluß zu öffnen, wird es in jedem Fall erforderlich, den Teilabschnitt 8B und die Formgebung 9 am Randabschnitt 6 radial aus den Ausnehmungen 11 und 12 am Randabschnitt 5 herauszudrücken, so daß wieder die in Fig. 5 dargestellte Zwischensituation eintritt, in welcher ein Auseinanderziehen der Randabschnitte 5 und 6 erfolgen kann.

Wie aus der vorstehenden Beschreibung ersichtlich, kann das erfindungsgemäße Wellrohr 1 nach Einlegen der zu ummantelnden elektrischen Leitungen o.ä. (diese sind in den Figuren nicht gezeigt) außerordentlich rasch geschlossen werden:

Die beiden Randbereiche 5 und 6 werden aufeinander zu bewegt und der Randbereich, an dem sich die Formausnehmungen 9 kleinster Breite **B3** finden, wird unter den anderen Randbereich hinuntergeschoben, wie dies Fig. 5 zeigt. Ist die in Fig. 5 gezeigte Stellung erreicht, werden nur noch die an dem unten liegenden Randbereich 6 vorhandenen Formausnehmungen 8B und 9 in die im darüberliegenden Randbereich 5 ausgeformten, radial nach unten hin offenen Ausnehmungen 11 und 12 eingedrückt, wobei zumindest die Teilabschnitte 8B in den Ausnehmungen 11 form- und reibschlüssig sitzen oder möglicherweise dort gar formschlüssig verrastet oder eingeclipst werden können. Damit ist der Verschluß dann bereits geschlossen.

Das hier beschriebenen Wellrohr 1 kann ohne Schwierigkeit nach Extrusion aus einem Extruder einem nachgeschalteten Korrugator zugeführt und durch diesen hergestellt werden, da die beschriebenen und illustrierten konstruktiven Ausgestaltungen des Wellrohresl keinerlei Hinterschneidungen aufweisen, welche einen Korrugatoreinsatz nicht zuließen.

Damit ist eine außerordentlich kostengünstige Herstellung des Wellrohres 1 möglich, wobei der vorgesehene Verschluß nicht nur sehr rasch, sondern auch besonders einfach betätigt werden kann und sich bei verschlossenem Wellrohr keinerlei unerwünschte radiale Stoßstellen am Außenumfang des Wellrohres 1 ergeben. Zudem weist das verschlossene Wellrohr 1 einen Querschnitt auf, der nahezu keine merkliche Ovalität mehr zeigt, so daß bereits vorhandene, im Querschnitt exakt kreisförmige Verteileranschlüsse ohne Schwierigkeiten angebracht werden können, ohne daß sich dabei auf der Abdichtseite Probleme ergeben.

**Patentansprüche**

1. Wellrohr (1) aus Kunststoff, insbesondere zum Ummanteln elektrischer Leitungen, mit über seine Länge verteilten, abwechselnd aufeinander folgenden, umlaufenden Wellenbergen (2) und Wellentälern (3), wobei die Wellenberge (2) gegenüber den Wellentälern (3) eine radiale Höhe (h) aufweisen, sowie mit einem entlang einer Mantellinie verlaufenden Schlitz (4), wobei die beidseits des Schlitzes (4) liegenden Randbereiche (5, 6) des Wellrohres (1) Formgebungen (7, 8, 9) an den Wellenbergen (2) aufweisen, mittels derer bei einander überlappenden Randbereichen (5, 6) ein lösbarer Verschluß ausbildbar ist, und wobei alle Formgebungen, in Umfangsrichtung jedes Wellenberges (2) gesehen, jeweils drei unmittelbar aneinander anschließende Formausbildungen (7, 8, 9) mit zueinander unterschiedlicher, in ihrer Abfolge am Wellenberg (2) entweder abnehmender oder zunehmender Breite (B1, B2, B3) umfassen, wobei der Schlitz (4) alle Formausbildungen (8) mittlerer Breite (B2) in zwei Teilabschnitte (8A, 8B) zerschneidet, deren jeder (8A, 8B) jeweils einem Randabschnitt (5, 6) zugeordnet ist, ferner alle Formgebungen (7, 8, 8A, 8B, 9) - im radialen Querschnitt der Wellenberge (2) gesehen - jeweils lage- und formidentisch zueinander angeordnet sind und die Formausbildungen (7, 8) größter (B1) und mittlerer (B2) Breite auf ihren radialen Unterseiten jeweils mit einer radial nach innen hin offenen Ausnehmung (11, 12) versehen sind, welche bei der Formausbildung (7) größter Breite (B1) eine Weite (W) aufweist, in welche die Außenform der Formausbildung (8) mittlerer Breite (B2) radial einsteckbar ist, und bei der Formausbildung (8) mittlerer Breite eine Weite hat, in welche die Außenform der Formausbildung (9) kleinster Breite (B3) radial einführbar ist,

   **dadurch gekennzeichnet, daß**

   die Mantelfläche des Wellrohres (1), in seinem nicht-verschlossenen Zustand, in dessen Wellentälern (3) und Wellenbergen (2) jeweils von zwei Kreisbögen (S1, S2; s1, s2) unterschiedlich großer Radien (R1, R2; r1, r2) gebildet wird, wobei die Kreisbögen (S1; s1) mit größeren Radien (R1, r1) und die Kreisbögen (S2; s2) mit kleineren Radien (R2, r2) im Querschnitt des Wellrohres (1) jeweils in gleichen Winkellagen zueinander liegen und jeweils der größere Radius (R1; r1) um die Wanddicke (D) im Wellental (3) größer als der jeweils kleinere Radius (R2; r2) ist, jeder der von den kleineren Radien gebildeten Kreisbögen (S2, s2) an seinem einen Ende in den vom entsprechenden größeren Radius (R1; r1) gebildeten Kreisbogen (S1; s1) tangential einmündet und an seinem anderen Ende über einen im wesentlichen radialen Steg (10, 10') mit dem anderen Ende des vom entsprechenden größeren Radius (R1; r1) gebildeten Kreisbogens (S1; s1) verbunden ist, wobei die beiden radialen Stege (10, 10') ebenso wie die tangentialen Einmündungen der Kreisbögen (S1, s1) mit größeren Radien in die Kreisbögen (S2, s2) mit kleineren Radien jeweils in gleichen Winkellagen zueinander liegen, und daß alle Formgebungen (7, 8, 9) in einem Bereich des vom kleineren Radius (R2; r2) gebildeten Kreisbogens (S2; s2) liegen, welcher den radialen Stegen (10. 10') benachbart ist, wobei ferner gilt: r1 = R1 - h und r2 = R2 - h, worin h die radiale Höhe der Wellenberge, R1 den größeren und R2 den kleineren Radius am Wellenberg, und r1 den größeren sowie r2 den kleineren Radius im Wellental bezeichnen.

**2.** Wellrohr nach Anspruch 1, **dadurch gekennzeichnet, daß** für die Bemessung der Breiten (B1, B2, B3) der Formausbildungen (7, 8, 9) gilt: B1 = B2 + 2x sowie B2 = B3 + 2x, worin B1 die größte Breite (Formausbildung 7), B2 die mittlere Breite (Formausbildung 8) und B3 die kleinste Breite (Formausbildung 9) und x die Wandstärke an der Flanke der Wellenberge (2) bezeichnen.

**3.** Wellrohr nach Anspruch 1 oder 2, **dadurch gekennzeichnet, daß** in der Abfolge der aneinander anschließenden Formausbildungen (7, 8, 9) die Formausbildungen (9) kleinster Breite, in Umfangsrichtung der Wellenberge (2) gesehen, an dem radialen Steg (10) enden.

**4.** Wellrohr nach einem der Ansprüche 1 bis 3, **dadurch gekennzeichnet, daß** sich der Kreisbogen (S2; s2) mit dem kleineren Radius (R2; r2) über einen Winkelbereich von 120° bis 160° erstreckt und der radiale Steg (10) im zweiten Quadranten des Querschnitts um einen Winkel im Bereich von 20° bis 160° zur Mittel-Hochachse (H) des Querschnitts versetzt liegt.

**5.** Wellrohr nach einem der Ansprüche 1 bis 4, **da-**

**durch gekennzeichnet, daß** jede der bei einem Wellenberg (2) aneinander anschließenden Formausbildungen (7, 8, 9) ungefähr parallel zur radialen Mittelebene des Wellenberges (2) verlaufende Seitenwände aufweist, die jeweils mit den Seitenwänden einer anschließenden Formausbildung über ungefähr senkrecht zur radialen Mittelebene des Wellenberges (2) verlaufende Wandabschnitte (13, 14) verbunden sind.

**6.** Wellrohr nach Anspruch 5, **dadurch gekennzeichnet, daß** die Formausbildungen (7, 8) größter und mittlerer Breite, in Umfangsrichtung der Wellenberge (2) gesehen, jeweils eine allgemein rechteckige Außenform sowie eine allgemein rechteckige Form ihrer inneren Ausnehmungen (11, 12) ausbilden.

**7.** Wellrohr nach einem der Ansprüche 1 bis 6, **dadurch gekennzeichnet, daß** zur Ausbildung des Verschlusses beim Überlappen der beidseits des Schlitzes (4) liegenden Randbereiche (5, 6) des Wellrohres (1) die am radial innen liegenden Randbereich (6) angebrachten Formausbildungen (8B) mittlerer Breite in die im darüber liegenden anderen Randbereich (5) angebrachten Ausnehmungen (12) der Formausbildungen (7) größter Breite formschlüssig einclipsbar sind.

## Claims

**1.** Corrugated tube (1) made of plastic, particularly for sheathing electrical wires, having wave crests (2) and wave troughs (3), which follow alternately after one another and which are distributed over its length, wherein the wave crests (2) comprise a radial height (h) with respect to the wave troughs (3), and having a slit (4) running along a surface line, wherein the border areas (5, 6) of the corrugated tube (1), which are located on both sides of the slit (4), comprise shape formations (7, 8, 9) at the wave crests (2), by which, when the border areas (5,6) overlap, a detachable fastening can be formed, and wherein every shape formation further includes, when viewed in a circumferential direction of each wave crest (2), three shape formations (7, 8, 9) which follow each other directly, each having a different width (B1, B2, B3) that is either decreasing or increasing with the sequence at the wave crest (2), wherein the slit (4) cuts all shape formations having an intermediate width (B2) into two parts (8A, 8B), each of which is associated with one border area (5, 6), all shape formations (7, 8, 8A, 8B, 9) - when viewing the radial cross section of the wave crests (2) - are further arranged to each other identical in position and shape, and the shape formations (7, 8) having the largest width (B1) and the middle width (B2) are provided with a radial recess (11, 12) being opened towards the inside on their radial bottom sides, which recess comprises at the shape formation (7) having the largest width (B1) a size (W), in which the outer shape of the shape formation (8) having the middle width (B2) is radially insertable, and which recess has at the shape formation (8) having the middle width a size, in which the outer shape of the shape formation (9) having the smallest width (B3) is radially insertable, **characterized in that**

the lateral surface of the corrugated tube (1), in its unclosed state, is respectively formed in its wave troughs (3) and wave crest (2) by two arcs (S1, S2; s1, s2) having different radii (R1, R2; r1, r2), wherein the arcs (S1; s1) having the larger radius and the arcs (s2; s2) having the smaller radius are arranged at the same angular positions in the cross section of the corrugated tube and the larger radius (R1;r1) is larger than the respective smaller radius (R2;r2) by the wall thickness (D) at the wave trough (3), each of the arcs (S2; s2) formed by the smaller radii leads at its end tangentially into the arc (S1; s1) formed by the respective larger radius (R1; r1) and is at its other end coupled via a substantially radial link (10, 10') with the other end of the respective arc (S1; s1) formed by the larger radius (R1; r1), wherein both radial links (10, 10') as well as the tangential junctions of the arcs (S1, s1) having the larger radii with the arcs (S2;s2) having the smaller radii are each arranged with the same angular positions to each other, and that all shape formations (7, 8, 9) are disposed in a portion of the arc (S2; s2) formed by the smaller radius (R2; r2), which is adjacent to the radial links (10, 10'), wherein it further applies: r1 = R1 - h and r2 = R2 - h, whereby h denotes the radial height of the wave crests, R1 the larger and R2 the smaller radius at the wave crest, and r1 the larger and r2 the smaller radius at the wave trough.

2. Corrugated tube according to claim 1, **characterized in that**, for the dimensioning of the width (B1, B2, B3) of the shape formations (7, 8, 9), it applies: B1 = B2 + 2x and B2 = B3 + 2x, wherein B1 denotes the largest width (shape formation 7), B2 denotes the middle width (shape formation 8) and B3 denotes the smallest width (shape formation 9), and x denotes the wall thickness at the edge of the wave crests (2).

3. Corrugated tube according to claim 1 or 2, **characterized in that**, within the sequence of the consecutive shape formations (7, 8, 9), the shape formations (9) of the smallest width, as viewed in the circumferential direction of the wave crests (2), end at the radial link (10).

4. Corrugated tube according to any one of the claims 1 to 3, **characterized in that** the arc (S2; s2) having the smaller radius (R2; r2) extends over an angular range from 120° to 160° and the radial link (10) in the second quadrant of the cross section is shifted by an angle within the range of 20° to 160° with respect to the middle vertical axis (H) of the cross section.

5. Corrugated tube according to any one of the claims 1 to 4, **characterized in that** each of the shape formations (7, 8, 9), that consecutively follow each other, comprises approximately parallel to the radial center plane of the wave crest (2) running side walls which are each connected to the side walls of a subsequent shape formation via wall portions (13, 14) running approximately perpendicular to the radial center plane of the wave crest (2).

6. Corrugated tube according to claim 1 to 5, **characterized in that** each of the shape formations (7, 8) of the largest and the middle width form, when viewed from the circumferential direction of the wave crest (2), a general rectangular outer shape and a general rectangular shape of their inner recesses (11, 12).

7. Corrugated tube according to any one of the claims 1 to 6, **characterized in that** for forming the fasting by the overlapping of the border areas (5, 6) of the corrugated tube (1), which are located on both sides of the slit (4), the shape formation (8B) of the middle width being attached at the radial inwardly located border area (6) is form-fittingly clipable into the in the overlying other border area (5) attached recess (12) of the shape formation (7) of the largest width.

**Revendications**

1. Tuyau ondulé (1) en plastique, notamment destiné à recouvrir des câbles électriques, comportant des sommets (2) et des creux (3) se succédant en alternance sur sa périphérie et distribués sur sa longueur, les sommets (2) présentant une hauteur radiale (h) par rapport aux creux (3), ainsi que comportant une fente (4) s'étendant le long de la ligne de l'enveloppe, les zones de bords (5, 6) du tuyau ondulé (1) situées des deux côtés de la fente (4) présentant des conformations (7, 8, 9) sur les sommets (2), permettant, lorsque les zones de bord (5, 6) se chevauchent, la formation d'une fermeture détachable, et toutes les conformations, vues dans la direction circonférentielle de chaque sommet (2), comprenant chacune trois formes (7, 8, 9) se se rejoignant directement et présentant des largeurs (B1, B2, B3) différentes les unes des autres, soit décroissantes, soit croissantes dans leur succession sur le sommet (2), la fente (4) sectionnant toutes les formes (8) de largeur moyenne (B2) en deux portions (8A, 8B), dont chacune (8A, 8B) est respectivement associée à une portion de bord (5, 6), toutes les conformations (7, 8, 8A, 8B, 9), vues en section transversale radiale des sommets (2), étant en outre respectivement disposées dans une position et une forme identiques les unes par rapport aux autres et les formes (7, 8) de largeur supérieure (B1) et moyenne (B2) étant pourvues sur leur face inférieure radiale respectivement d'un évidement (11, 12) ouvert radialement vers l'intérieur, qui, pour la forme (7) de largeur supérieure (B1), présente une étendue (W), dans laquelle la forme extérieure de la forme (8) de largeur moyenne (B2) peut être emboîtée radialement, et, pour la forme (8) de largeur moyenne, présente une étendue dans laquelle la forme extérieure de la forme (9) de largeur inférieure (B3) peut être insérée radialement, **caractérisé en ce que**

la surface de l'enveloppe du tuyau ondulé (1), dans son état non fermé, est formée dans ses creux (3) et ses sommets (2) respectivement par deux arcs de cercle (S1, S2 ; s1, s2) ayant des rayons (R1, R2 ; r1, r2) de dimensions différentes, les arcs de cercle (S1 ; s1) avec des rayons plus grands (R1, r1) et les arcs de cercle (S2 ; r2) avec des rayons plus petits (R2, r2) étant respectivement dans des positions angulaires identiques les uns par rapport aux autres dans la section transversale du tuyau ondulé (1) et le rayon plus grand (R1 ; r1) étant respectivement plus grand par l'épaisseur de paroi (D) dans le creux (3) que le rayon plus petit (R2 ; r2) respectif, chacun des arcs de cercle (S2, s2) formés par les rayons plus petits débouchant au niveau de l'une de ses extrémités de manière tangentielle dans l'arc de cercle (S1 ; s1) formé par le rayon plus grand (R1 ; r1) correspondant et étant relié au niveau de son autre extrémité à l'autre extrémité de l'arc de cercle (S1 ; s1) formé par le rayon plus grand (R1 ; r1) correspondant par le biais d'un talon (10, 10') sensiblement radial, les deux talons (10, 10') radiaux, de même que les débouchés tangentiels des arcs de cercle (S1, s1) avec des rayons plus grands dans les arcs de cercle (S2, s2) avec des rayons plus petits se situant respectivement dans des positions angulaires identiques les uns par rapport aux autres, et **en ce que** toutes les conformations (7, 8, 9) se situent dans une zone de l'arc de cercle (S2 ; s2) formée par le rayon le plus petit (R2 ; r2), qui est adjacente aux talons (10, 10') radiaux, dans lequel on a en outre : r1 = R1-h et r2 = R2-h, où h désigne la hauteur radiale des sommets, R1 le plus grand et R2 le plus petit rayon au niveau du sommet, et r1 le plus grand et r2 le plus petit rayon au niveau du creux.

2. Tuyau ondulé selon la revendication 1, **caractérisé en ce que**, pour le dimensionnement des largeurs (B1, B2, B3) des formes (7, 8, 9) on a : B1 = B2 + 2x ainsi que B2 =B3 + 2x, où B1 désigne la largeur supérieure (forme 7), B2 la largeur moyenne (forme 8) et B3 la largeur inférieure (forme 9) et x l'épaisseur de paroi sur le flanc des sommets (2).

3. Tuyau ondulé selon la revendication 1 ou 2, **caractérisé en ce que**, dans la succession des formes (7, 8, 9) se rejoignant, les formes (9) de largeur inférieure, vues dans la direction circonférentielle des sommets (2), se terminent au talon (10).

4. Tuyau ondulé selon l'une des revendications 1 à 3, **caractérisé en ce que** l'arc de cercle (S2 ; s2) avec le plus petit rayon (R2 ; r2) s'étend sur une plage angulaire de 120° à 160° et le talon (10) dans le deuxième quart de cercle de la section transversale se trouve décalé d'un angle compris dans la plage de 20° à 160° par rapport à l'axe vertical médian (H) de la section transversale.

5. Tuyau ondulé selon l'une des revendications 1 à 4, **caractérisé en ce que** chacune des formes (7, 8, 9) se rejoignant sur un sommet (2) présente des parois latérales s'étendant approximativement parallèlement au plan médian radial du sommet (2), les parois latérales étant reliées respectivement aux parois latérales d'une forme successive par le biais de portions de paroi (13, 14) s'étendant approximativement perpendiculairement au plan médian radial du sommet (2).

6. Tuyau ondulé selon la revendication 5, **caractérisé en ce que** les formes (7, 8) de largeur supérieure et de largeur moyenne, vues dans la direction circonférentielle des sommets (2), présentent respectivement une forme extérieure globalement rectangulaire ainsi qu'une forme de leurs évidements (11, 12) intérieurs globalement rectangulaire.

7. Tuyau ondulé selon l'une des revendications 1 à 6, **caractérisé en ce que**, pour former la fermeture lors du chevauchement des zones de bords (5, 6) du tuyau ondulé (1) se trouvant des deux côtés de la fente (4), les formes (8B) de largeur moyenne rapportées sur la zone de bord (6) située radialement à l'intérieur peuvent être enclenchées par complémentarité de formes dans les évidements (12) des formes (7) de largeur supérieure rapportées dans l'autre zone de bord (5) se situant au-dessus.

## Fig. 1

## Fig. 2

## Fig. 4

## Fig. 3

**Fig. 5**

**Fig. 6**

**Fig. 7**

**Fig. 8**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 3246594 A1
- DE 19641421 A1
- DE 19705761 A1
- DE 19700916 A1
- DE 3405552 A1
- EP 0860921 A
- JP 2003079021 A